Europäisches Patentamt

European Patent Office ·

Office européen des brevets

(11) Veröffentlichungsnummer: **0 268 165**
**A1**

## (12) EUROPÄISCHE PATENTANMELDUNG

(21) Anmeldenummer: 87116399.4

(51) Int. Cl.⁴: **G03B 42/04**

(22) Anmeldetag: 06.11.87

(30) Priorität: **18.11.86 DE 3639344**

(43) Veröffentlichungstag der Anmeldung:
**25.05.88 Patentblatt 88/21**

(84) Benannte Vertragsstaaten:
**ES FR IT**

(71) Anmelder: **Agfa-Gevaert AG**
**Patentabteilung**
**D-5090 Leverkusen 1(DE)**

(72) Erfinder: **Bauer, Walter**
**Heinrich-Wieland-Strasse 178**
**D-8000 München 83(DE)**
Erfinder: **Schmidt, Manfred, Dipl.-Ing.**
**Ligusterweg 34**
**D-8011 Kirchheim(DE)**
Erfinder: **Plaschke, Herbert, Ing. grad.**
**Graf-Törring-Strasse 12**
**D-8031 Gernlinden(DE)**
Erfinder: **Butz, Otto**
**Erikaweg 1**
**D-8056 Neufahrn(DE)**

(54) **Vorrichtung zum Ent- und Beladen von Röntgenfilmkassetten.**

(57) Ein Vorrichtung zum Ent-und Beladen von Röntgenblattfilmkassetten genormter, aber unterschiedlicher Größe ihrer Flachseiten, die jeweils für die Aufnahme unterschiedlicher Blattfilmsorten bestimmt sein können und mit der jeweiligen Blattfilmsorte wiederbeladbar sind, wobei die Vorrichtung einen lichtdicht verschließbaren Schacht für die Aufnahme einer Kassette, Transportmittel zum Ein-und Ausführen der Kassette, Mittel zum Positioneren der Kassette an einer für alle verwendbaren Kassetten gleichgelegenen Kassettenecke, eine mechanisch-elektronische Vergleichseinrichtung zum Ermitteln des Formats einer Kassette und Mittel zur Filmentnahme aus der und zum Eingeben eines neuen Filmes in die Kassette aufweist, ist so ausgebildet, daß zur automatischen Unterscheidbarkeit von denselben Größenbereichen angehörenden, mit unterschiedlichen Filmsorten zu beladenden Kassettentypen (15, 15E) an den Kassetten wenigstens eines der Typen wenigstens eine von außen abtastbare Markierung (15e, 15f, 42) vorgesehen ist, die bei positionierter Kassette von wenigstens einem vorrichtungsseitigen Fühler (36; 40 bzw. 41) abtastbar ist, und daß der oder die Fühler (36; 40, 41) zur automatischen Auswahl der richtigen Blattfilmgröße

und -sorte mit der Vergleichseinrichtung (18) verbunden sind. Dadurch läßt sich auf einfache Weise zusätzlich zum Kassettenformat die in eine Kassette eingelegte Filmsorte automatisch berücksichtigen.

Fig. 3

Xerox Copy Centre

## Vorrichtung zum Ent-und Beladen von Röntgenfilmkassetten

Die Erfindung betrifft eine Vorrichtung zum Ent- und Beladen von Röntgenblattfilmkassetten genormter, aber unterschiedlicher Größe ihrer Flachseiten, die jeweils für die Aufnahme unterschiedlicher Blattfilmsorten bestimmt sein können und mit der jeweiligen Blattfilmsorte wiederbeladbar sind, wobei die Vorrichtung einen lichtdicht verschließbaren Schacht für die Aufnahme einer Kassette, Transportmittel zum Ein-und Ausführen der Kassette, Mittel zum Positionieren der Kassette an einer für alle verwendbaren Kassetten gleichgelegenen Kassettenecke, eine mechanisch-elektronische Vergleichseinrichtung zum Ermitteln des Formats einer Kassette, eine Öffnungsvorrichtung für die Kassette und Mittel zur Filmentnahme aus der und zum Eingeben eines neuen Filmes in die Kassette aufweist.

Vorrichtungen ähnlicher Art sind bereits in den verschiedensten Varianten bekannt, z.B. durch die EP-OS 0 052 159 A1. Dabei war es bisher nicht möglich, auf mechanische oder mechanisch-elektronische Weise Filmkassetten gleicher Größe, die mit unterschiedlichen Filmsorten zu beladen waren, automatisch zu erkennen und mit einem Film nicht nur der richtigen Größe, sondern auch der richtigen Filmsorte wieder zu beladen.

Andere ähnliche Einrichtungen, bei denen die Kassetten in Abhängigkeit von ihrer Größe und der in ihnen enthaltenen Filmsorte unterschiedliche elektrisch oder magnetisch oder elektro-optisch abtastbare Codes aufweisen, sind bekannt durch die nicht vorveröffentlichten DE-OS 35 33 953 oder 35 33 954 oder 36 09 527. Bei Vorhandensein vieler verschiedener Filmformate und Filmsorten sind viele verschiedene Codes und eine entsprechende, die vielen verschiedenen Codes auswertende Auswertvorrichtung erforderlich. Hierdurch ist es nicht möglich, daß ein Benutzer selbst die Codierung entsprechend seinen speziellen Bedürfnissen vornimmt.

Der Erfindung liegt demgegenüber die Aufgabe zugrunde, bei einer Vorrichtung der eingangs genannten Art mit mechanischer bzw. mechanisch-elektronischer Ermittlung des Kassettenformats eine zusätzliche mechanisch-elektronische Möglichkeit der Berücksichtigung unterschiedlicher, in den Kassetten zu verwendender Filmsorten zu - schaffen.

Diese Aufgabe wird erfindungsgemäß gelöst durch die Merkmale des Hauptanspruchs. Weitere vorteilhafte Merkmale der Erfindung sind den Unteransprüchen entnehmbar.

Durch die erfindungsgemäße Vorrichtung unter Einbeziehung von entsprechenden Kassetten ist es möglich, mit einfachsten mechanischen Mitteln zusätzlich zur Ermittlung des Formats einer eingegebenen Kassette auch die in ihr enthaltene bzw. vorzusehende Filmsorte automatisch zu berücksichtigen. Weiterhin ist es möglich, mit denselben mechanischen und den angeschlossenen elektronischen Mitteln automatisch zu kontrollieren, ob eine Kassette lagerichtig (z.B. mit dem Deckel nach oben) eingegeben und richtig positioniert ist bzw. falls eine Kassettenart überhaupt nicht in der Vorrichtung verarbeitbar ist. Schließlich ist die mechanische Filmsortencodierung so einfach ausgebildet, daß sie vom Benutzer in Anpassung an seine Bedürfnisse nach einer Gebrauchsanleitung vorgenommen werden kann.

Die Erfindung wird anhand von Zeichnungen näher erläutert. Es zeigen

Fig. 1 eine schematische Darstellung einer möglichen Ausführungsform einer erfindungsgemäßen Kassettenent-und -beladevorrichtung,

Fig. 2 einen Schnitt durch die Darstellung nach Figur 1 gemäß der Schnittlinie II-II,

Fig. 3 eine Darstellung eines Ausschnitts einer anderen erfindungsgemäßen Ausführungsform,

Fig. 3a einen Schnitt durch die Darstellung nach Figur 3 gemäß der Schnittlinie IIIa-IIIa,

Fig. 3b den Schnitt nach Figur 3a bei falsch eingesetzter Kassette,

Fig. 3c den Schnitt nach Figur 3a bei anderer Kassettencodierung,

Fig. 4 eine verkleinerte perspektivische Darstellung einer Kassette zur Verwendung in einer Vorrichtung nach Figur 3,

Fig. 4a bis 4c Ansichten eines Ausschnitts der Kassette nach Figur 4 in Blickrichtung IVa bei verschiedenen Kassettencodierungen.

In den Figuren sind nur die für die vorliegende Erfindung wesentlichen Teile einer Vorrichtüng zum Ent-und Beladen von Röntgenfilmkassetten unterschiedlicher Formate dargestellt. Dabei sind mit 1 ein bekannter Schacht zur Aufnahme jeweils einer Kassette bezeichnet, Transportmittel zum Ein-und Ausführen einer Kassette, die durch am Schachtboden angeordnete Transportwalzen gebildet werden können, und Mittel zum lichtdichten Verschließen einer Eingabeöffnung des Schachtes 1 aber nicht gezeigt. Stirnseitig im Schacht 1 sind nicht gezeigte, bekannte Mittel zum Entriegeln einer an einem später zu beschreibenden Anschlag angelangten Kassette vorgesehen, wobei die Kassette z.B. unter der Wirkung schwacher Federn aufspringt. Springt der Kassettendeckel ausreichend weit für eine Ent-und Beladung auf, dann können drehbare Nocken u.U. nur zum völligen Zudrücken des Deckels nach erneuter Beladung einer Kassette dienen. Sie können aber auch zum Öffnen und späteren Wiederschließen des Deckels ausgestaltet sein. Die Öffnungsmitteln müssen in der zur Kassetteneingaberichtung 7 transversalen Richtung 8 derart verschiebbar sein, daß die Öffnungsvorrichtung an die unterschiedlichen, in der Vorrichtung verwendbaren Kassettenformate automatisch anpaßbar ist. Stirnseitig über und/oder vor der Vorrichtung zum Öffnen einer Kassette sind bekannte Mittel zum Entnehmen eines Filmblattes aus der Kassette und zum Einführen eines neuen Filmblattes in die Kassette angeordnet. Im übrigen sind in bekannter und daher nicht gezeigter Weise Blattfilmvorratsmagazine vorgesehen, die Filme der verschiedenen Formate und Sorten enthalten, mit denen die in der Vorrichtung verwendbaren Kassetten der unterschiedlichen Formate beladen werden sollen. Außerdem ist in nicht gezeigter Weise entweder ein Zwischenmagazin zum Sammeln der den Kassetten entnommenen Filme vorgesehen oder es ist eine Entwicklungsmaschine für die entnommenen Filme direkt angeschlossen.

Die Ermittlung des Formats einer eingegebenen Kassette und die Auswahl und Zuführung eines hierzu passenden neuen Filmblattes erfolgt automatisch nach automatischer Ausmessung der Längen der beiden Kassettenschmalseiten. Vor Ausmessung des Formats einer eingegebenen Kassette muß diese genau positioniert sein.

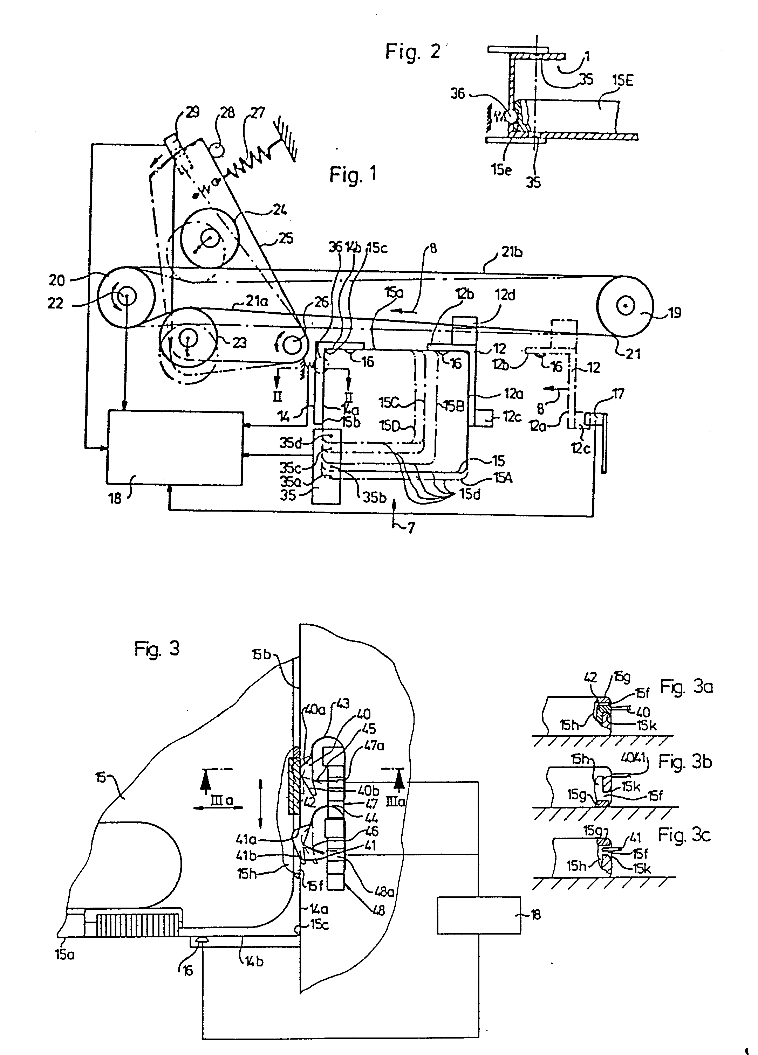

Daher wird als mögliches Beispiel anhand von Figur 1 eine bezüglich des Ent-und Beladegerätes toleranzfreie Positionier-und Meßeinrichtungen für eine Kassettenseite beschrieben gemäß der DE-OS 35 44 719. Dabei wird die nach Positionierung einer Kassette 15 zur Eingaberichtung 7 senkrechte, stirnseitige Kassettenseite 15a bestimmt. Somit ist eine zur Eingaberichtung 7 transversale Verschiebeeinrichtung erforderlich, die in Pfeilrichtung 8 hin-und herbewegbar sein muß. Diese transversale Verschiebeeinrichtung weist eine als rechtwinkeliges Winkelstück 12a, 12b ausgebildete Klemmbacke 12 auf, die zugleich die verschiebbaren Teile zum Öffnen einer Kassette 15 trägt. Diese auf einer nicht gezeigten transversalen Stange verschiebbare Klemmbacke 12 ist in Figur 1 strichpunktiert in ihrer Ausgangsstellung und ausgezogen in einer Positionierstellung für eine Kassette 15 größten Formats gezeichnet. Die verschiebbare Klemmbacke 12 ist gegenüber einer weiteren, bezüglich der transversalen Verschieberichtung 8 festen, ebenfalls als rechtwinkeliges Winkelstück 14a, 14b ausgebildeten Klemmbacke 14 verschiebbar. Die Schenkel 14a, 14b bilden dabei einen seitlichen und stirnseitigen Anschlag für die mittels der Transportwalzen in den Schacht 1 transportierte Kassette 15. Die beiden Klemmbacken 12, 14 sind so auf der Stange angeordnet, daß ihre aufeinander zu gerichteten Schenkel 12b, 14b miteinander fluchten. Eine gerade gegen die Anschläge 14a, 14b transportierte Kassette wird beim Hinbewegen der Klemmbacke 12 also einfach geklemmt und dadurch positioniert. Eine irgendwie zwischen der Klemmbacke 14 und der in Ausgangsstellung befindlichen, verschiebbaren Klemmbacke 12 antransportierte Kassette wird beim Bewegen der Klemmbacke 12 unter der zusätzlichen Wirkung der Transportrollen gegen die Anschläge 14b, 12b bewegt und zwischen den Schenkeln 14a, 12a ausgerichtet. An den stirnseitigen Schenkeln 14b, 12b und ggf. bei sehr unterschiedlich großen Kassetten auch dazwischen sind Schaltkontakte 16 vorgesehen, die beim Eintreffen einer neu eingegebenen Kassette 15 den Antrieb für die verschiebbare Klemmbacke 12 einschalten. Diese Schalter 16 können beispielsweise als Lichtschranken oder Mikroschalter ausgebildet sein. In der Ausgangsstellung der verschiebbaren Klemmbacke 12 liegt eine Fahne 12c derselben im Meßbereich einer Lichtschranke 17 oder dergl., durch die bei Beginn der Verschiebebewegung der Klemmbacke 12 ein mit einem Rechner 18 und einer Vergleichseinrichtung zusammenwirkendes Zählwerk einschaltbar ist.

Der Antrieb für die verschiebbare Klemmbacke 12 weist einen endlosen, über zwei Seilrollen 19, 20 relativ lose geführten Seilzug 21 auf, an dem die Klemmbacke 12 über einen abgewinkelten Arm 12d befestigt ist. Die Antriebsrolle 20 wird durch einen nicht erkennbaren Schrittschaltmotor, dessen Motorwelle 22 mit der Welle der Antriebsrolle 20 koaxial angeordnet sein kann, angetrieben. Die Antriebsrolle 20 liegt in Bewegungsrichtung 8 der Klemmbacke 12 auf eine zu positionierende Kassette 15 zu vor der Klemmbacke 12, so daß das Trum des Seilzugs 21, an dem die Klemmbacke 12 befestigt ist, bei der Positionierbewegung das Lasttrum 21a und das gegenüberliegende Trum das Leertrum 21b darstellen.

Um nun den lose über die Seilrollen 19, 20 gelegten Seilzug 21 zu spannen, sind zwei Spannrollen 23, 24 vorgesehen, die gleichzeitig am Lasttrum 21a bzw. Leer trum 21b anliegen und den Seilzug 21 in gespannter Stellung halten. Die Seilrollen 23, 24 sind beide auf einer Schwinge 25 gelagert, die um eine gehäusefeste Achse 26 - schwenkbar ist und unter der Wirkung einer Feder 27 gegen einen Anschlag 28 gezogen wird. In dieser Ausgangsstellung liegt die Schwinge 25 im Bereich einer Lichtschranke 29. Die Stellung der auf der Schwinge gelagerten Spannrollen 23, 24 ist dabei so festgelegt, daß in dieser Ausgangsstellung die lasttrumseitige Spannrolle 23 den Seilzug 21 am Lasttrum 21a spannt, so daß das Lasttrum 21 eine Durchbiegung an der Spannrolle 23 erfährt. Das Leertrum 21b verläuft dabei zwischen den Seilrollen 19, 20 geradlinig.

Wird nun beim Eintreffen einer neuen Kassette 15 die Verschiebeeinrichtung über mindestens einen der Schalter 16 eingeschaltet, so beginnt der Schrittschaltmotor 22 zu laufen und bewegt über den Seilzug 21 die Klemmbacke 12 in Pfeilrichtung 8. Verläßt die Fahne 12c dabei die Lichtschranke 17, was immer in der gleichen Position stattfindet, so wird das Zählwerk eingeschaltet. Dieses zählt die Schaltschritte des Schrittschaltmotors 22 bis zu dessen Abschaltung. Erreicht dabei die Klemmbacke 12 die Position, in der eine Kassette 15 bestimmter Seitenlänge 15a positioniert ist, so läuft der Motor 22 zunächst noch weiter. Dabei wird infolge der Bemessung der Feder 27 aber nicht die positionierte Kassette 15 stärker geklemmt, sondern die Spannung des Lasttrums 21a nimmt zu und verdrängt die Spannrolle 23 so lange, bis vorzugsweise das Lasttrum 21a geradlinig verläuft und dafür das Leertrum 21b eine Durchbiegung durch die Spannrolle 24 erfährt. Bei dieser Verdrängung der Spannrolle 23 wird die Schwinge 25 unter definierter Spannung der Feder 27 um ein ganz bestimmtes Winkelstück verschwenkt. Die Lichtschranke 29 ist so angeordnet, daß genau nach Erreichen dieser Verschwenkung die Schwinge 25 aus der Lichtschranke 29 herausbewegt ist und der Motor 22 sofort abgeschaltet wird. Das Zählwerk hat dabei die Schaltschritte des Motors zwischen dem Verlassen der Lichtschranke 17 durch die Fahne 12c und dem Abschalten des Motors beim Verlassen der Lichtschranke 29 durch die Schwinge 25 gemessen. Diese Schrittzahl ist genau proportional zur zu bestimmenden Länge de Kassettenseite 15a.

In Figur 1 sind in der Vorrichtung verarbeitbare Kassetten unterschiedlichen Formats mit 15, 15A, 15B, 15C, 15D und 15E bezeichnet, wobei die Kassette mit der größten Länge in Richtung der quer zur Eingaberichtung 7 verlaufenden Kassettenschmalseite 15a mit 15 bezeichnet und ausgezogen gezeichnet worden ist. Die übrigen Kassettentypen 15A bis 15D sind unterschiedlich strichpunktiert gezeichnet worden, wobei die Schmalseite 15a des Typs 15A die gleiche Länge wie die des Typs 15 aufweist. Die Länge ihrer hierzu senkrechten Schmalseite 15b ist jedoch größer als die des Typs 15. Die Längen der Schmalseite 15a und 15b der Kassettentypen 15B bis 15D unterscheiden sich im gezeigten Beispiel zur Erläuterung der Funktion der Vorrichtung alle voneinander, indem sie zunehmend kleiner werden. Es wäre aber auch hierbei durchaus möglich, daß zwei der kleineren Kassettentypen in einer ihrer Seitenlängen gleich sind. Bezüglich der Meßanordnung wäre dann wie bei den Kassettentypen 15 und 15A zu verfahren.

Wie bereits beschrieben, werden Kassetten aller verwendbaren Typen 15 bis 15D mit ihrer gemäß Figur 1 linken, in Eingaberichtung stirnseitigen Ecke 15c im Schacht 1 an der gleichen Stelle, nämlich dem Winkelstück 14a, 14b im Schacht 1 positioniert. Die Positioniereinrichtung könnte dabei grundsätzlich auch anders ausgebildet sein. Dabei wird auch die Länge der senkrecht zur Eingaberichtung 7 verlaufenden jeweiligen Schmalseite 15a ausgewertet und der Vergleichseinrichtung 18 zugeführt.

Um nun die jeweilige Länge einer in Eingaberichtung 7 verlaufenden Schmalseite 15b einer eingegebenen Kassette 15 bis 15E platzsparend und unter Berücksichtigung möglicher Kassettentoleranzen mit einfachen Mitteln so zu bestimmen, daß die Vergleichseinrichtung 18 zusammen mit der ermittelten Länge der Schmalseite 15a das Format einer eingegebenen Kassette ermitteln kann, ist als mögliches Beispiel parallel zur Eingaberichtung 7, also parallel zur zu ermittelnden Schmalseite 15b eine Reihe 35 von Lichtschranken 35a bis 35d derart angeordnet, daß eine an der Ecke 15c ausgerichtete Kassette zwischen einer oder mehreren der Lichtschranken 35a bis 35d liegt. Die Lichtschranken 35a bis 35d sind mit der Vergleichseinrichtung 18 verbunden. Dabei ist die Lichtschranke 35d so angeordnet, daß sie nahe der zur Schmalseite 15a parallelen und zur Schmalseite 15b senkrechten Schmalseite 15d des kleinsten Kassettentyps 15D und die Flachseiten dieses Typs in der Positionierungslage dazwischen liegen. Ist eine Kassette vom kleinsten Typ 15D eingegeben worden, so wird also nur die Lichtschranke 35d unterbrochen. Die nächste Licht schranke 35c liegt zwischen den Schmalseiten 15d des kleinsten Kassettentyps 15D und des nächstgrößeren Kassettentyps 15C. Eine positionierte Kassette vom Typ 15C unterbricht also die beiden Lichtschranken 35d und 35c. Die nächste Lichtschranke 35b liegt zwischen den Schmalseiten 15d der Kassettentypen 15B und 15. Eine positionierte Kassette vom Typ 15B unterbricht also auch nur die Lichtschranken 15d und 35c. In Verbindung mit der Ermittlung der unterschiedlichen Längen der Schmalseite 15a bei den Typen 15C und 15B kann die Vergleichseinrichtung jedoch den eingegebenen Kassettentyp fehlerfrei ermitteln. Eine positionierte Kassette vom Typ 15 unterbricht die Lichtschranken 35d, 35c und 35b. Damit die Vergleichseinrichtung 18 die beiden Kassettentypen 15 und 15A, deren Seitenlänge 15a gleich ist, unterscheiden kann, muß zwischen den Schmalseiten 15d der Kassetten vom Typ 15 und vom Typ 15a noch eine Lichtschranke 35a vorgesehen sein, so daß Kassetten vom Typ 15A dann in ihrer positionierten Lage alle Lichtschranken 35a bis 35d unterbrechen.

Nun tritt es immer häufiger auf, daß zwei verschiedene Kassettentypen bezüglich ihrer Schmalseitenlängen oder -längenbereiche gleich sind, sich aber durch die in ihnen befindlichen oder in sie einzulegenden Filmsorten unterscheiden und/oder durch unterschiedliche Kassettendicke, weil beispielsweise in einem Kassettentyp noch ein Sekundärstrahlenstreugitter angeordnet ist. In diesem Falle reicht die bisher beschriebene Ermittlung der Längenbereiche der beiden zueinander senkrechten Schmalseiten einer Kassette nicht mehr aus, um die Kassettentypen zu unterscheiden. Hierauf richtet sich nun die Erfindung. Daher ist nach den Figuren 1 und 2 bei bezüglich der Längenbereiche ihrer beiden zueinander senkrechten Schmalseiten gleichen, aber sonst irgendwie unterschiedlichen Kassettentypen, z.B. Typ 15 und Typ 15E, vgl. Figur 2, an einem dieser äußerlich fast gleichen, aber doch unterschiedlichen Typen eine von außen abfühlbare Markierung 15e, vgl. Figur 2, vorgesehen, die durch einen Fühler 36 im Schacht 1 in der positionierten Lage einer Kassette abtastbar ist. Auch dieser Fühler ist mit der Vergleichseinrichtung 18 verbunden und signalisiert bei in die Ausnehmung 15e eingefallenem Fühler 36, daß es sich um den zweiten Kassettentyp mit denselben Ausmaßen der Flachseiten handelt, so daß mittels der Vergleichseinrichtung 18 dann nicht nur das richtige Filmformat, sondern auch die richtige Filmsorte dieses Formats zum Neubeladen der Kassette bereitgestellt wird. Diese Ausführungsform ist dann brauchbar, wenn pro Kassettenformat höchstens zwei verschiedene Kassettentypen, die mit unterschiedlichen Filmsorten zu beladen sind, benötigt werden. Dabei ist es natürlich möglich, an den Kassetten 15, 15E generell die Ausnehmung 15e vorzusehen und zur Unterscheidung der zwei Typen eines Kassettenformats dann bei Typ 15 die Ausnehmung 15e durch einen Stöpsel oder Stift zu verschließen.

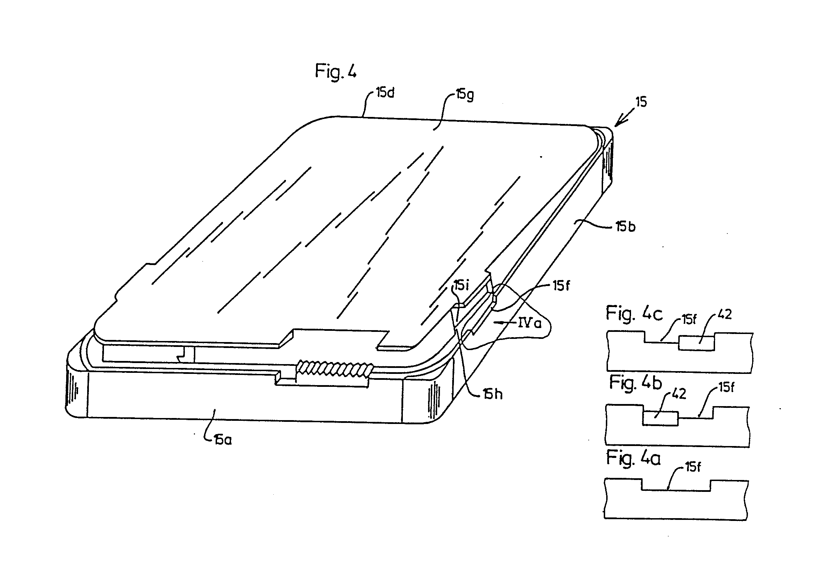

Eine andere erfindungsgemäße Ausführungsform, bei der je Kassettenformat drei verschiedene Kassettentypen automatisch unterscheidbar sind und die entsprechenden Markierungen nicht nur je nach Bedarf auswechselbar sind, sondern auch noch zur Feststellung der lagerichtigen Eingabe einer Kassette in die Vorrichtung verwendbar sind, ist in den Figuren 3 bis 4c gezeigt.

Bei diesen Ausführungsbeispielen ist für die Markierung an der der zu positionierenden Kassettenecke 15c benachbarten Kassetten-Schmallängsseite 15b einer jeden Kassette 15 an der Kassettenecke 15c genau zugeordneter gleicher Stelle ein Schlitz 15f vorgesehen. Der Schlitz 15f wird durch einen Ausschnitt in dem seitlichen Kassettenwandteil gebildet und von oben bei geschlossener Kassette durch den Kassettendeckel 15g begrenzt. Hinter dem den Ausschnitt 15f aufweisenden Kassettenwandteil liegt ein freier Raum 15h, welcher durch eine kassettenseitige, zur Schmalseite 15b parallele Labyrinthrippe begrenzt wird. Zwischen die Schmalseite 15b und die nicht sichtbare Labyrinthrippe greift bei geschlossenem Deckel 15g eine deckelseitige Labyrinthrippe 15i ein. Zwischen ihr und dem die Schmalseite 15b bildenden Kassettenwandteil bleibt aber noch so viel Zwischenraum, daß vorrichtungsseitige Fühler 40, 41 in den Schlitz 15f tief einfallen können bzw. daß über die nach außen eine Abschrägung 15k aufweisende Schlitzunterkante Reiter 42 zum teilweisen Ausfüllen des Schlitzes 15f steckbar sind.

Die Reiter 42 haben gegen die Schlitzunterkante 15k hin eine zu dieser komplementäre, im wesentlichen U-förmige Form, so daß sie, mit der Außenfläche der Schmalseite 15b fluchtend und den Schlitz 15f über ihre Länge abdeckend, über die Schlitzunterkante steckbar sind. Gemäß dem gezeigten Ausführungsbeispiel hat der Schlitz 15f die Länge von zwei Reitern 42, wobei die Fühler 40, 41 so voneinander beabstandet sind, daß die bei positionierter Kassette 15 entweder beide in den Schlitz 15f einfallen können oder derjenige Fühler 40 oder 41, der auf einen in den Schlitz 15f eingesetzten Reiter 42 trifft, nicht in den Schlitz 15f einfallen kann. Gemäß Figur 3 wird der Fühler 40 durch den Reiter 42 zurückgedrängt. Gemäß dem vorliegenden Beispiel sind drei verschiedene Markierungen für ein Kassettenformat möglich, also drei Kassettentypen verschiedenen Inhaltes unterscheidbar. Ein Kassettentyp ist dadurch markiert, daß kein Reiter 42 in den Schlitz 15f eingesetzt ist, also beide Fühler 40, 41 einfallen können. Der zweite Kassettentyp wird dadurch markiert, daß ein Reiter 42 der Stirnseite 15a benachbart in den Schlitz 15f eingesetzt wird, so daß nur der Fühler 40 in den Schlitz 15f einfallen kann. Der dritte Kassettentyp wird dadurch markiert, daß ein Reiter 42 von der Stirnseite 15a entfernt in den Schlitz 15f eingesetzt wird, so daß nur der Fühler 41 noch in den Schlitz 15f einfallen kann, vgl. Fig.3, 3a und 3c. Die Codierung der verschiedenen Kassettentypen eines Formats wird bei allen verwendbaren Formaten immer so vorgenommen, daß wenigstens einer der beiden Fühler 40, 41 in einen freien Teil des Schlitzes 15f bei richtiger Positionierung einer Kassette und auch richtig eingegebener Kassette einfallen kann. Wie später noch ausführlicher beschrieben wird, sind die Fühler 40, 41 mit der Vergleichseinrichtung 18 verbunden derart, daß bei Einfallen eines Fühlers 40 oder 41 in einen freien Teil des Schlitzes 15f an die Vergleichseinrichtung 18 ein Signal für eine richtig eingesetzte, richtig positionierte, in der Vorrichtung verarbeitbare Kassette geliefert wird. Ist jedoch beispielsweise gemäß Figur 3b eine Kassette falsch, z.B. mit dem Deckel 15g nach unten, oder ist überhaupt eine nicht verarbeitbare Kassette in die Vorrichtung eingegeben worden, so kann kein Fühler 40, 41 in den Schlitz 15f einfallen. Die Vergleichseinrichtung 18 erhält daher ein Signal für eine nicht verarbeitbare Kassette und transportiert diese wieder aus der Vorrichtung heraus.

Die Fühler 40, 41 haben die Form zweier aufeinander-und gegen die Kassettenschmalseite 15b bzw. den Schlitz 15f hin zulaufender Keilflächen 40a, 40b bzw. 41a, 41b und sind an Federarmen 43, 44 gegen die Kassettenschmalseite 15b hin vorgespannt. Mit jedem Fühler 40 bzw. 41 ist eine Fahne 45 bzw. 46 verbunden, die beim Einfallen des Fühlers 40 bzw. 41 in den zugeordneten Teil des Schlitzes 15f aus einer Lichtschranke 47a bzw. 48a heraustauchen. Die Lichtschranken 47a bzw. 48a sind je mit einer Auswertvorrichtung 47 bzw. 48 verbunden, die ihrerseits ihre Ergebnisse an die Vergleichseinrichtung 18 melden. Je nach der Stellung der Fühler 40 und 41 verarbeitet die Vergleichseinrichtung 18 also die Meldung der verarbeitbaren oder nicht verarbeitbaren Kassette und der in dem jeweiligen Kassettentyp enthaltenen Filmsorte. Bei Vorhandensein einer verarbeitbaren Kassette erfolgt von der Vergleichseinrichtung 18 aus dann der Befehl an das jeweils nach Filmgröße und Filmsorte benötigte Dispensermagazin für die Wiederbeladung der Kassette.

Selbstverständlich wäre es möglich, den Schlitz 15f auch noch länger zu machen, um dann drei oder mehr Rei ter 42 wahlweise einsetzen zu können. Dabei müßte dann auch eine entsprechende Anzahl von Fühlern 40, 41 u.a. an der Vorrichtung vorgesehen sein. Die Keilform 40a, 40b bzw. 41a, 41b hat dabei den Vorteil, daß die Fühler 40, 41 beim Einsetzen einer Kassette während deren Bewegung in Pfeilrichtung 7 und 8 leicht in einen freien Teil eines Schlitzes 15f hinein-und wieder herausgleiten können. Es wäre aber auch möglich, als Ausnehmungen für die Schaffung der Markierungen zwei oder mehrere der Ausnehmung 15e entsprechende Bohrungen an der Kassettenschmalseite, ggf. auch an der stirnseitigen Kassettenschmalseite 15a, vorzusehen und diese nach Bedarf mit kleinen Pfropfen zu schließen. Diese Filmsortencodierung kann nach einer Bedienungsanleitung bei den einzelnen Kassetten je nach Bedarf vom Benutzer selbst vorgenommen werden.

**Ansprüche**

1. Vorrichtung zum Ent-und Beladen von Röntgenblattfilmkassetten genormter, aber unterschiedlicher Größe ihrer Flachseiten, die jeweils für die Aufnahme unterschiedlicher Blattfilmsorten bestimmt sein können und mit der jeweiligen Blattfilmsorte wiederbeladbar sind, wobei die Vorrichtung einen lichtdicht verschließbaren Schacht für die Aufnahme einer Kassette, Transportmittel zum Ein-und Ausführen der Kassette, Mittel zum Positionieren der Kassette an einer für alle verwendbaren Kassetten gleichgelegenen Kassettenecke, eine mechanisch-elektronische Vergleichseinrichtung zum Ermitteln des Formats einer Kassette, eine Öffnungsvorrichtung für die Kassette und Mittel zur Filmentnahme aus der und zum Eingeben eines neuen Filmes in die Kassette aufweist, dadurch gekennzeichnet, daß zur automatischen Unterscheidbarkeit von denselben Größen oder Größenbereichen angehörenden, mit unterschiedlichen Filmsorten beladbaren Kassettentypen (15, 15E) an den Kassetten wenigstens eines der Typen wenigstens eine von außen abtastbare Markierung (15e; 15f, 42) vorgesehen ist, die bei positionierter Kassette von wenigstens einem vorrichtungsseitigen Fühler (36; 40 bzw. 41) abtastbar ist, und daß der oder die Fühler (36; 40, 41) zur automatischen Auswahl der zur Wiederbeladung richtigen Blatt filmgröße und -sorte mit der Vergleichseinrichtung (18) verbunden sind.

2. Vorrichtung nach Anspruch 1, dadurch gekennzeichnet, daß die Markierung (15e) oder Markierungen (15f, 42) durch eine oder mehrere Ausnehmungen (15e; 15f) gebildet werden, der oder denen bei positionierter Kassette der oder die Fühler (36; 40, 41) gegenüberliegen und unter Federwirkung (43, 44) eingreifen.

3. Kassette für eine Vorrichtung nach Anspruch 2, dadurch gekennzeichnet, daß zur Anpassung der Markierung (15e) oder der Markierungen (15f, 42) von Kassetten derselben Größe an unterschiedliche Filmsorten enthaltende Kassettentypen (15, 15E) die Ausnehmung (15e; 15f) oder Ausnehmungen einer Kassette durch in sie einsetzbare Stöpsel oder Reiter (42) ganz oder teilweise ausfüllbar sind.

4. Kassette nach Anspruch 3, dadurch gekennzeichnet, daß die Ausnehmung durch einen in einer Kassettenschmalseite (15b) vorgesehenen Schlitz (15f) gebildet wird, dessen Länge so bemessen ist, daß er über den Abtastbereich mehrerer nebeneinander liegender Fühler (40, 41) reicht, und daß seine einzelnen, je einem Fühler (40 bzw. 41) zugeordneten Bereiche bedarfsweise durch in ihn einsetzbare Stöpsel oder Reiter (42) ausfüllbar sind.

5. Kassette nach Anspruch 4, dadurch gekennzeichnet, daß ein den Schlitz (15f) begrenzendes Wandteil (15b) vom Schlitz (15f) weg nach außen eine Abschrägung (15k) aufweist, daß hinter dem Wandteil (15b) ein freier Raum (15h) vorgesehen ist, daß der Reiter (42) zum Wandteil hin eine zur Schlitzkante des Wandteiles (15k) komplementäre, etwa U-ähnliche Form hat und, mit der Kassettenaußenseite fluchtend, über das Wandteil steckbar ist.

6. Vorrichtung nach einem der vorhergehenden Ansprüche, dadurch gekennzeichnet, daß der Fühler (36) als Kugelraste ausgebildet ist.

7. Vorrichtung nach einem der vorhergehenden Ansprüche, dadurch gekennzeichnet, daß der Fühler (40 bzw. 41) die Form zweier aufeinander- und gegen die Ausnehmung bzw. den Schlitz (15f) hin zulaufender Keilflächen (40a, 40b bzw. 41a, 41b) aufweist.

8. Vorrichtung nach einem der vorhergehenden Ansprüche, dadurch gekennzeichnet, daß der Fühler (40 bzw. 41) eine Fahne (45 bzw. 46) aufweist, die je nach der Stellung des Fühlers (40 bzw. 41) mit einer Lichtschranke (47a bzw. 48a) zusammenwirkt.

9. Vorrichtung nach einem der vorhergehenden Ansprüche, dadurch gekennzeichnet, daß alle Fühler (40, 41) oder die ihnen zugeordneten Licht - schranken (47a, 48a) mit einer elektronischen Auswertvorrichtung (47,48) und diese mit der Vergleichseinrichtung (18) verbunden sind.

10. Vorrichtung nach einem oder mehreren der vorhergehenden Ansprüche, dadurch gekennzeichnet, daß unterschiedliche Kassettentypen derselben Größe oder desselben Größenbereiches an unterschiedlichen Stellen jeweils mindestens eine unausgefüllte Ausnehmung oder einen unausgefüllten Schlitzbereich (15f) aufweisen, die bzw. der nur bei lagerichtig in die Vorrichtung eingegebener und richtig positionierter Kassette im Eingriffsbereich eines der Fühler (40 bzw. 41) liegt, und daß bei Nichtvorhandensein wenigstens eines in eine Ausnehmung oder einen Schlitzbereich einfallenden Fühlers (40 bzw. 41) die Auswertvorrichtung (47,48) an die Vergleichseinrichtung (18) ein Signal für eine nicht verarbeitbare Kassette liefert.

Fig. 1

Fig. 2

Fig. 3

Fig. 3a

Fig. 3b

Fig. 3c

Fig. 4

15d    15g    15

15b

15i    15f

IVa

15h

15a

Fig. 4c    15f    42

Fig. 4b    42    15f

Fig. 4a    15f

A·G 5199

Europäisches
Patentamt

**EUROPÄISCHER RECHERCHENBERICHT**

Nummer der Anmeldung

| | **EINSCHLÄGIGE DOKUMENTE** | | EP 87116399.4 | |
|---|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG** (Int. Cl.4) | |
| D,A | DE - A1 - 3 533 953 (AGFA)<br>* Zusammenfassung; Fig. *<br>-- | 1 | G 03 B 42/04 | |
| D,A | DE - A1 - 3 533 954 (AGFA)<br>* Zusammenfassung; Fig. *<br>-- | 1 | | |
| D,A | EP - A1 - 0 052 159 (HALLENWANG)<br>* Zusammenfassung; Fig. 1-7 *<br>---- | 1 | | |
| | | | **RECHERCHIERTE SACHGEBIETE** (Int. Cl.4) | |
| | | | G 03 B 42/00<br>G 03 B 17/00<br>G 03 B 1/00 | |
| | Der vorliegende Recherchenbericht wurde für alle Patentansprüche erstellt. | | | |
| | Recherchenort | Abschlußdatum der Recherche | | Prüfer |
| | WIEN | 12-02-1988 | | VAKIL |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82